# EUROPEAN PATENT SPECIFICATION

(11) **EP 4 091 788 B1**
(45) Date of publication and mention of the grant of the patent: **31.01.2024**
(21) Application number: 21382452.7
(22) Date of filing: 18.05.2021
(51) Int. Cl.: B29C 45/14, B65D 1/34, B65D 1/48, B29C 37/00

(54) **METHOD OF MANUFACTURING A FOOD CONTAINER AND THE PRODUCT THUS OBTAINED**
VERFAHREN ZUR HERSTELLUNG EINES LEBENSMITTELBEHÄLTERS UND DAS SO ERHALTENE PRODUKT
MÉTHODE DE FABRICATION D'UN RÉCIPIENT ALIMENTAIRE ET LE PRODUIT AINSI OBTENU

(43) Date of publication of application: 23.11.2022
(73) Proprietor: ITC Packaging, S.L.U., 03440 Ibi (Alicante) (ES)
(72) Inventor: Galera Sánchez, Pedro, 03440 Ibi (ES)
(74) Representative: Ballester Cañizares, Rosalia

(56) References cited:
- WO-A1-2009/074721
- US-A- 3 415 709

## Description

The object of this invention refers to a product that consists of a container that combines cardboard and plastic and to a manufacturing process to form such a container which is suitable for both dry foods and liquids.

### State of the art

Currently, containers that are made of cardboard and in which certain plastic elements, such as a lid, are inserted, are known. However, these containers are particular in that they cannot be recycled properly by users since it is practically impossible to separate the plastic parts from parts made of cardboard.

Document WO2012/114270A1 describes a process for forming a container which comprises: (a) forming a cardboard model in a container that has a bottom part and one or more side walls extending upwards from the bottom part; (b) providing a moulded cavity in the upper edge of one or more of the aforementioned cardboard side walls; and (c) moulding a plastic edge that extends essentially upwards by means of the injection of a plastic material into said moulded cavity. This document, however, does not describe that the container can be formed in a single forming or injection phase, in accordance with claim 5 of this invention.

Document EP0816239A1 describes a packaging container wherein the plastic lining extends around the upper edge of a cardboard and with a distance downwards on its outer edge. The problem of joining and the subsequent separation of the parts is resolved in a surprisingly simple way. The cardboard part does not need to be glued together, the reason being that adherence is achieved by means of a foil around the upper edge of the packaging container, and the parts can be subsequently separated easily and without problems since the cardboard can be detached from the plastic part by pulling it gently. This provides benefits from a production point of view as well as good recycling characteristics.

On the other hand, document EP2726380B1 describes a food container that comprises an open-topped cardboard tray which is folded out of a sheet or is shaped like a cardboard sheet pressed into a mould, the tray of which comprises a bottom, a side wall and a flange extending along the peripheral edge of the side wall, which packaging further includes a plastic film sealed to the inside of the tray and sealed with its edge to the flange to the tray, characterised in that between the film and the flange a flexible plastic separating ring is positioned which is sealed to the flange and on which the film is sealed to the edge.

Document ES2427838T3 describes a process for forming a container, in which a container is formed in the form of a container from a die-cut cardboard, the container having a bottom and side walls extending upwards from the bottom and wherein, on the upper part of the side walls, a flange is moulded with moulding material that extends to the sides, during the final phase of compression moulding when the mould is kept closed, such that the cavity of the mould corresponding to the flange is formed by means of the backwards movement of a counter surface of the inside of the mould from an opposite surface to it, after which the moulding material is introduced into the mould cavity.

Document US8418871B1 describes a hybrid cardboard/thermoformed container comprising a moulded cardboard tray with a rim and a peripheral flange containing a flange portion extending horizontally from the rim; and a thermoformed plastic frame with a rib having an inside wall and an outside wall that define an interior region of the rib between the inside and outside walls; wherein the outside wall of the rib includes a protrusion extending into the interior region of the rib; and wherein the moulded cardboard tray can be attached to the thermoformed plastic frame by engaging the rim of the moulded cardboard tray with the rib of the thermoformed plastic frame and snapping the flange portion into position above the protrusion inside the interior part of the rib with the flange portion bent downwards from the rim.

Document WO2009/074721A1 describes a method for forming a packaging, wherein the packaging is formed in the shape of a container from a piece of cardboard, the packaging having a bottom and side walls extending upwards from the bottom, characterised in that, in the upper part of the side walls, a rim of moulding material extends sideways in the final phase of compression moulding when the mould is kept closed, such that the mould cavity corresponding to the rim is formed by moving a counter surface inside the mould backwards from a surface opposite to it, after which the moulding material is introduced into the mould cavity.

However, none of these documents describes a container with the characteristics of resistance, consistency and ease of recycling desirable for this type of food packaging.

### Explanation of the invention

An object of this invention is a manufacturing method for food packaging comprising a cardboard body on which a frame is moulded and a plastic lid in its upper mouth and which has the peculiarity of being manufactured together in a single mould, forming a single body. The combination of both materials makes it possible, at the end of the useful life of the product, for the consumer to separate the cardboard body from the frame and the plastic lid, depositing each type of material in the corresponding container, thus facilitating recycling.

A further object of this invention is that said food packaging that combines a cardboard body with a mouth and plastic lid has suitable characteristics of consistency to fulfil its function. Both objectives are achieved by the food container in accordance with claim 1 and by the manufacturing method in accordance with claim 5. Particular solutions and examples of said manufacturing method are described in the dependent claims.

As indicated, the main advantage is that both products (plastic and cardboard) can be easily separated by the user, which facilitates recycling tasks. Furthermore, from a logistical point of view, both the initial raw material and the container obtained are easy to store and stack. Finally, the container obtained is very stable mechanically as well as very resistant compared to traditional cardboard containers.

Throughout the description and the claims, the word «comprises» and its variants are not intended to exclude other technical characteristics, additives, components or steps. To those skilled in the art, other objects, benefits and characteristics of the invention will be apparent in part from the invention and in part from putting the invention into practice. The following examples and drawings are provided by way of illustration and are not intended to restrict this invention. Furthermore, the invention covers all possible combinations of particular and preferred embodiments indicated herein.

### Brief description of the drawings

The following is a very brief description of a series of drawings which help to better understand the invention, and which relate expressly to an embodiment of said invention, which is illustrated as a non-limiting example thereof.

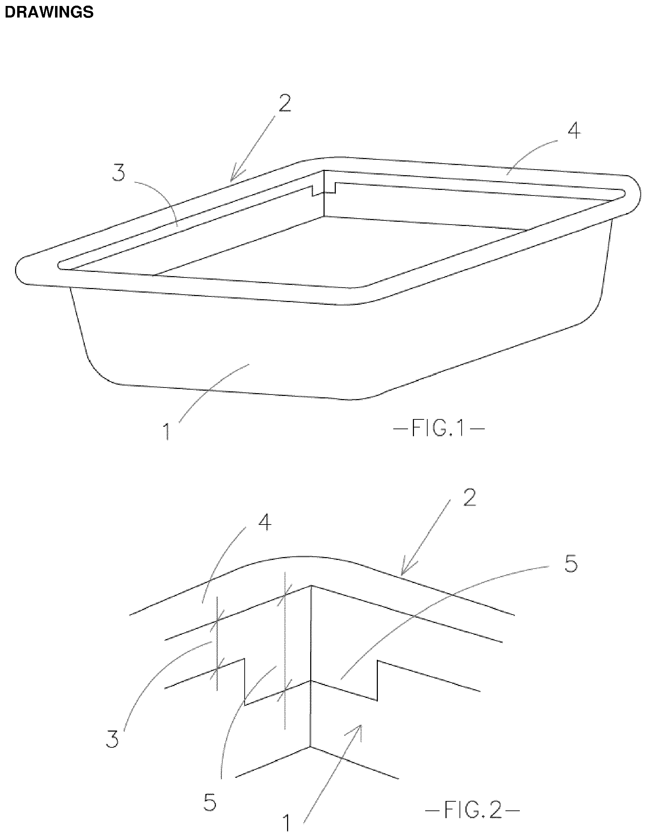

**FIG.1** shows a schematic view of a food container obtained in accordance with a preferred embodiment of the manufacturing method that is the object of this invention.
**FIG.2** shows a detailed schematic view of one corner of the food container obtained in accordance with a preferred embodiment of the manufacturing method shown in **FIG.1**

### Detailed explanation of an embodiment of the invention

In a non-limiting example of the invention, the food container of the invention comprises a cardboard body 1 -in the image, a quadrangular body, although it could have another geometrical shape- with two extreme regions, upper and lower, which will correspond, in a standard way, with the mouth and bottom of the container.

The attached figures show a practical embodiment of the invention, where it can be shown how the cardboard body 1 comprises a plastic frame 2 around the perimeter of its upper mouth. This plastic frame 2 -preferably polypropylene or a biodegradable plastic- comprises first flaps 3 that form an angle with a flange 4 that protrudes sideways with respect to the cardboard body 1. Each corner of the plastic frame 2, which logically coincide with the corners of the cardboard body 1, has the particularity of having a second flap 5 that emanates from each of the adjoining and coinciding first flaps 3 in the corner where the two second flaps 5 are located towards the lower part of the cardboard body 1.

These second flaps 5 have a width that is, at least, double the width of the first flap 3.

The synergistic function of the first flaps 3 and the second flaps 5 is, specifically, to reinforce the whole of the cardboard body 1, facilitating its function as a food container.

The manufacturing process starts with the introduction of a piece of die-cut cardboard into a plastic injection mould. When placed inside the mould and closed, the walls of the cardboard box will bend and form the quadrangular shape of the container. A plastic material (polypropylene or a biodegradable plastic) is then injected on the flat part of the upper edge of the cardboard walls in such a way that the upper part of the cardboard walls is covered down to a lower level of the inner area of the walls, generally around 10-15 mm, said plastic being reinforced in the corner areas.

in a particular embodiment, moreover, the upper area of the walls of the cardboard body (1) comprises a plurality of through holes through which part of the injected plastic can be introduced, which are configured as reinforcing pins to improve the stability of the joint between the plastic mouth and the cardboard.

Finally, once the box has been conformed and removed from the injection mould, the inner area of the container is completely covered with a plastic foil (polyethylene or biodegradable plastic) which is vacuum thermosealed on the inner area of the mouth, thus leaving the inside of the container hermetically covered by a material that prevents any transfer between the product contained in the container and the cardboard walls.

## Claims

1. A food container comprising a cardboard body (1) with two outer regions, upper and lower, corresponding, as standard, to the mouth and the bottom of the container; and wherein the cardboard body (1) comprises a plastic frame (2) around the perimeter of the upper mouth, wherein the plastic frame (2) comprises first flaps (3) which form an angle with a flange (4) that protrudes sideways with respect to the cardboard body (1),
wherein each corner of the plastic frame (2), which coincides with the corners of the cardboard body (1), comprises a second flap (5) that emanates from each of the adjoining and coinciding first flaps (3); wherein the second flaps (5) are located towards the lower part of the cardboard body (1),
**characterised in that** the second flaps (5) have a width that is, at least, double the width of the first flap (3).

2. The container according to claim 1 wherein the plastic frame (2) is made of polypropylene or a biodegradable plastic.

3. The container according to any of the preceding claims wherein the upper area of the walls of the cardboard body (1) comprises a plurality of through holes in which reinforcing pins configured to improve the stability of the joint between the plastic frame (2) and the cardboard body (1) are housed.

4. The container according to any of the preceding claims wherein the cardboard body (1) comprises an inner lining consisting of a foil of an impermeable material.

5. A manufacturing method for a food container according to any of claims 1 to 4 that combines cardboard and plastic in a single body, and which comprises
introducing at least one sheet of cardboard into a plastic injection mould to form the body (1) of the container; and
injecting a plastic frame (2) into the same mould in which the body of the container was formed.

6. The manufacturing method of claim 5 which comprises a step wherein the inside of the container is coated with an impermeable foil.

7. The method according to either one of claims 5 or 6 which comprises a step wherein plastic is injected into through holes located in the upper part of the walls of the cardboard body (1) configured as reinforcing pins configured to improve the stability of the joint between the plastic frame (2) and the cardboard body (1).

## Patentansprüche

1. Lebensmittelbehälter, umfassend einen Pappkartonkörper (1) mit zwei äußeren Bereichen, einem oberen und einem unteren, die standardmäßig der Öffnung und dem Boden des Behälters entsprechen; und wobei der Pappkartonkörper (1) einen Kunststoffrahmen (2) um den Umfang der oberen Öffnung herum umfasst,
wobei der Kunststoffrahmen (2) erste Laschen (3) umfasst, die einen Winkel mit einem Flansch (4) bilden, der in Bezug auf den Pappkartonkörper (1) seitlich hervorsteht,
wobei jede Ecke des Kunststoffrahmens (2), die mit den Ecken des Pappkartonkörpers (1) übereinstimmt, eine zweite Lasche (5) umfasst, die von jeder der angrenzenden und übereinstimmenden ersten Laschen (3) ausgeht; wobei sich die zweiten Laschen (5) in Richtung des unteren Teils des Pappkartonkörpers (1) befinden, **dadurch gekennzeichnet, dass** die zweiten Laschen (5) eine Breite aufweisen, die mindestens dem Doppelten der Breite der ersten Lasche (3) entspricht.

2. Behälter nach Anspruch 1, wobei der Kunststoffrahmen (2) aus Polypropylen oder einem biologisch abbaubaren Kunststoff hergestellt ist.

3. Behälter nach einem der vorhergehenden Ansprüche, wobei der obere Bereich der Wände des Pappkartonkörpers (1) eine Vielzahl von Durchgangslöchern umfasst, in denen Verstärkungsstifte untergebracht sind, die konfiguriert sind, um die Stabilität der Verbindung zwischen dem Kunststoffrahmen (2) und dem Pappkartonkörper (1) zu verbessern.

4. Behälter nach einem der vorhergehenden Ansprüche, wobei der Pappkartonkörper (1) eine Innenauskleidung umfasst, die aus einer Folie aus einem undurchlässigen Material besteht.

5. Herstellungsverfahren für einen Lebensmittelbehälter nach einem der Ansprüche 1 bis 4, das Pappkarton und Kunststoff in einem einzigen Körper kombiniert und umfasst
Einbringen mindestens einer Pappkartonlage in eine Kunststoffspritzgussform, um den Körper (1) des Behälters zu bilden; und
Einspritzen eines Kunststoffrahmens (2) in dieselbe Form, in der der Behälterkörper gebildet wurde.

6. Herstellungsverfahren nach Anspruch 5, das einen Schritt umfasst, wobei die Innenseite des Behälters mit einer undurchlässigen Folie beschichtet wird.

7. Verfahren nach einem der Ansprüche 5 oder 6, das einen Schritt umfasst, wobei Kunststoff in Durchgangslöcher eingespritzt wird, die sich im oberen Teil der Wände des Pappkartonkörpers (1) befinden und als Verstärkungsstifte konfiguriert sind, um die Stabilität der Verbindung zwischen dem Kunststoffrahmen (2) und dem Pappkartonkörper (1) zu verbessern.

## Revendications

1. Récipient alimentaire comprenant un corps en carton (1) avec deux régions externes, supérieure et inférieure, correspondant, en standard, à l'embouchure et au fond du récipient ; et dans lequel le corps en carton (1) comprend un cadre en plastique (2) autour du périmètre de l'embouchure supérieure,
dans lequel le cadre en plastique (2) comprend des premiers rabats (3) qui forment un angle avec une bride (4) qui fait saillie latéralement par rapport au corps en carton (1),
dans lequel chaque coin du cadre en plastique (2), qui coïncide avec les coins du corps en carton (1), comprend un second rabat (5) qui émane de chacun des premiers rabats (3) adjacents et coïncidents ; dans lequel les seconds rabats (5) sont situés vers la partie inférieure du corps en carton (1), **caractérisé en ce que** les seconds rabats (5) ont une largeur qui est, au moins, le double de la largeur du premier rabat (3).

2. Récipient selon la revendication 1 dans lequel le cadre en plastique (2) est constitué de polypropylène ou d'un plastique biodégradable.

3. Récipient selon l'une quelconque des revendications précédentes dans lequel la zone supérieure des parois du corps en carton (1) comprend une pluralité de trous traversants dans lesquels des broches de renfort configurées pour améliorer la stabilité du joint entre le cadre en plastique (2) et le corps en carton (1) sont logées.

4. Récipient selon l'une quelconque des revendications précédentes dans lequel le corps en carton (1) comprend un revêtement interne constitué d'une couche d'un matériau imperméable.

5. Procédé de fabrication d'un récipient alimentaire selon l'une quelconque des revendications 1 à 4 qui combine du carton et du plastique dans un seul corps, et qui comprend
l'introduction d'au moins une feuille de carton dans un moule d'injection de plastique pour former le corps (1) du récipient ; et
l'injection d'un cadre en plastique (2) dans le même moule dans lequel le corps du récipient a été formé.

6. Procédé de fabrication selon la revendication 5 qui comprend une étape dans laquelle l'intérieur du récipient est recouvert d'une couche imperméable.

7. Procédé selon l'une des revendications 5 ou 6 qui comprend une étape dans laquelle du plastique est injecté dans des trous traversants situés dans la partie supérieure des parois du corps en carton (1) configurés en tant que broches de renfort configurées pour améliorer la stabilité du joint entre le cadre en plastique (2) et le corps en carton (1).
